(19) **Europäisches Patentamt**

**European Patent Office**

**Office européen des brevets**

(11) **EP 1 039 113 A2**

(12) **EUROPEAN PATENT APPLICATION**

(43) Date of publication:
27.09.2000  Bulletin 2000/39

(51) Int. Cl.$^7$: **F02B 33/20**

(21) Application number: **00105374.3**

(22) Date of filing: **20.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.03.1999 JP 7793499**
**13.07.1999 JP 19942799**
**10.02.2000 JP 2000033699**

(71) Applicant: **KAY SEVEN CO., LTD.**
**Chiyoda-ku, Tokyo 100-0006 (JP)**

(72) Inventor: **Kuribayashi, Sadatomo**
**Tokyo 152-0022 (JP)**

(74) Representative:
**Klingseisen, Franz, Dipl.-Ing. et al**
**Patentanwälte,**
**Dr. F. Zumstein,**
**Dipl.-Ing. F. Klingseisen,**
**Postfach 10 15 61**
**80089 München (DE)**

(54) **Two-cycle internal combustion engine and scavenging pump for use in the same**

(57)    In a two-cycle internal combustion engine, a scavenging pump (16) is secured to a crank case (14) of the two-cycle internal combustion engine for converting the reciprocative motion of a piston (4) disposed in a cylinder (2) to the rotational motion of a crank shaft (8). The scavenging pump (16) is provided with a pump cylinder (16B), a pump piston (16C), a cam (18a) secured to the crank shaft (8), and a cam follower (16Da') which is engaged with the cam (18a) and secured to the pump piston (16C). A discharge port (16G) of the pump cylinder (16B) and an intake port (22) of the cylinder (2) are connected to each other, and the positional relationship between the intake port (22) and the exhaust port (24) is set so that there exists such a state that the exhaust port (24) is closed by the piston (4) and the intake port (22) is not perfectly closed by the piston (4), and fuel is injected from a nozzle (12) into the cylinder (2).

F I G . 1

**Description**

BACKGROUND OF THE INVENTION

1. Field of the Invention

The present invention relates to a technical field of an internal combustion engine, and more particularly to a two-cycle internal combustion engine and a scavenging pump used for the two-cycle combustion engine.

2. Description of the Related Art

A two-stroke cycle internal-combustion engine which is simple in construction and effective to compactness has been widely used as a prime mover for motorcycle and others. According to the two-cycle internal combustion engine, a cylinder cavity is made to intercommunicate with both of an intake port and an exhaust port from the last half of a fuel combusting stroke to the first half of an air intake stroke to perform a scavenging operation for taking mixture air of fuel and air (fuel/air mixture gas) into the cylinder cavity and exhausting combusted gas to the outside of the cylinder. Accordingly, so-called raw gas before combustion is discharged to the outside of the cylinder. Therefore, the two-cycle internal combustion engine has had such a problem that it is difficult to reduce the concentration of hydrocarbons, etc. in the exhausted gas and also it is difficult to enhance the power and the specific fuel consumption. Furthermore, as a scavenging system for the two-cycle internal combustion engine has been known one in which gas filled in a crank case is supplied to a cylinder by utilizing the operation of a piston. In this case, mist of lubricating oil in the crank case is also sucked into the cylinder, so that the amount of the lubricating oil burned in the cylinder is increased and thus the concentration of the hydrocarbons and other components in the exhausted gas is further increased.

SUMMARY OF THE INVENTION

Therefore, an object of the present invention is to improve the scavenging stroke in the two-cycle internal combustion engine, purify exhausted gas and enhance the output power and the specific fuel consumption.

In order to attain the above object, according to the present invention, there is provided a two-cycle internal combustion engine in which a piston is disposed in a cylinder so as to be reciprocatively movable and the reciprocative motion of the piston is converted to the rotational motion of a crank shaft which is connected to the piston, wherein a scavenging pump is installed in a crank case in which the crank shaft is accommodated, the scavenging pump comprises a pump cylinder, a pump piston disposed in the pump cylinder so as to be reciprocatively movable, and a pump driving force transmitting member for transmitting the driving force between the crank shaft and the pump piston so as to generate at least a part of the reciprocative motion of the pump piston on the basis of the rotation of the crank shaft, and a discharge port of the pump cylinder and an intake port of the cylinder are connected to each other.

In an aspect of the present invention, the pump driving force transmitting member comprises a cam secured to the crank shaft, and a cam follower which is engaged with the cam and secured to the pump piston; the cam transmits the driving force to the cam follower in both directions of the reciprocative motion of the pump piston; the cam is an eccentric cam having a circular outer peripheral portion, an annular member having an inner peripheral portion which is slidable in the peripheral direction relatively to the outer peripheral portion of the cam is provided, and two mutually parallel slide outer faces formed on the peripheral portion of the annular member and two mutually parallel side inner faces formed on the cam follower are fitted to each other so as to be relatively slidable in a direction perpendicular to the crank shaft; and, the annular member is formed by disposing plural members so that adjacent ones of the plural members thereof abut against each other.

In another aspect of the present invention, the scavenging pump sucks the outside air into the pump cylinder through a suction port.

In still another aspect of the present invention, the positions of an exhaust port of the cylinder and the intake port of the cylinder are set so that there exists such a state that the exhaust port is closed by the piston and the intake port is not perfectly closed by the piston.

In still another aspect of the present invention, a fuel injection nozzle for injecting fuel into the cylinder is provided.

In still another aspect of the present invention, the cylinder is provided with the intake port and/or an exhaust port on the side surface thereof, and also provided, on the inner surface thereof, with a lubricating oil groove surrounding the intake port and/or the exhaust port.

In still another aspect of the present invention, a plurality of exhaust ports are formed in the head of the cylinder, each of the exhaust ports is provided with an exhaust valve, and the exhaust valves are controlled to open/close the exhaust ports.

In still another aspect of the present invention, the control of the exhaust valves is performed in synchronism with the rotation of the crank shaft on the basis of the rotation of the crank shaft.

According to the present invention, there is provided a cylinder for use in a two-cycle internal combustion engine in which a piston is disposed in a cylinder so as to be reciprocatively movable and the reciprocative motion of the piston is converted to the rotational motion of a crank shaft, wherein an intake port and/or an exhaust port are formed on the side surface of the cylinder, and a lubricating oil groove surrounding each of the intake port and/or the exhaust port is formed on the inner surface of the cylinder.

According to the two-cycle internal combustion engine of the present invention, the scavenging pump is driven interlockingly with the operation of the engine, and the mist of the lubricating oil in the crank case is prevented from being sucked into the cylinder, so that the burning of the lubricating oil in the cylinder can be minimized, and the scavenging, the air intake and further the supercharging can be implemented. Further, no raw gas is exhausted, the combustion efficiency can be enhanced, reduction of the atmospheric pollution and enhancement of the output power can be achieved, and the specific fuel consumption can be reduced.

BRIEF DESCRIPTION OF THE DRAWINGS

Fig. 1 is a partially cross-sectional side view showing a first embodiment of a two-cycle internal combustion engine according to the present invention;
Fig. 2 is a partially cross-sectional front view showing the first embodiment of the two-cycle internal combustion engine according to the present invention;
Fig. 3 is a partially exploded perspective view showing the first embodiment of the two-cycle internal combustion engine according to the present invention;
Fig. 4 is a perspective view showing a modification of a cam follower used in the first embodiment of the two-cycle internal combustion engine according to the present invention;
Fig. 5 is a cross-sectional view showing the operation of the first embodiment of the two-cycle internal combustion engine according to the present invention;
Fig. 6 is a cross-sectional view showing the operation of the first embodiment of the two-cycle internal combustion engine according to the present invention;
Fig. 7 is a cross-sectional view showing the operation of the first embodiment of the two-cycle internal combustion engine according to the present invention;
Fig. 8 is a cross-sectional view showing the operation of the first embodiment of the two-cycle internal combustion engine according to the present invention;
Fig. 9 is a cross-sectional view showing the operation of the first embodiment of the two-cycle internal combustion engine according to the present invention;

Fig. 10 is a cross-sectional view showing the operation of the first embodiment of the two-cycle internal combustion engine according to the present invention;
Fig. 11 is a timing chart showing the operation of the first embodiment of the two-cycle internal combustion engine according to the present invention;
Figs. 12A and 12B are a partial perspective view and an exploded perspective view showing a modification of the engagement between a cam and a cam follower of the two-cycle internal combustion engine according to the present invention;
Fig. 13 is a partially notched perspective view showing an embodiment of a cylinder of the two-cycle internal combustion engine according to the present invention;
Fig. 14 is a cross-sectional view showing a second embodiment of the two-cycle internal combustion engine according to the present invention;
Fig. 15 is a cross-sectional view showing a third embodiment of the two-cycle internal combustion engine according to the present invention;
Fig. 16 is a cross-sectional view showing the third embodiment of the two-cycle internal combustion engine according to the present invention;
Fig. 17 is an exploded perspective view showing a scavenging pump portion of the third embodiment of the two-cycle internal combustion engine according to the present invention; and
Fig. 18 is an exploded perspective view showing a modification of a scavenging pump portion of the third embodiment of the two-cycle internal combustion engine according to the present invention.

DETAILED DESCRIPTION OF THE PREFERRED EMBODIMENTS

Preferred embodiments according to the present invention will be described hereinafter with reference to the accompanying drawings.

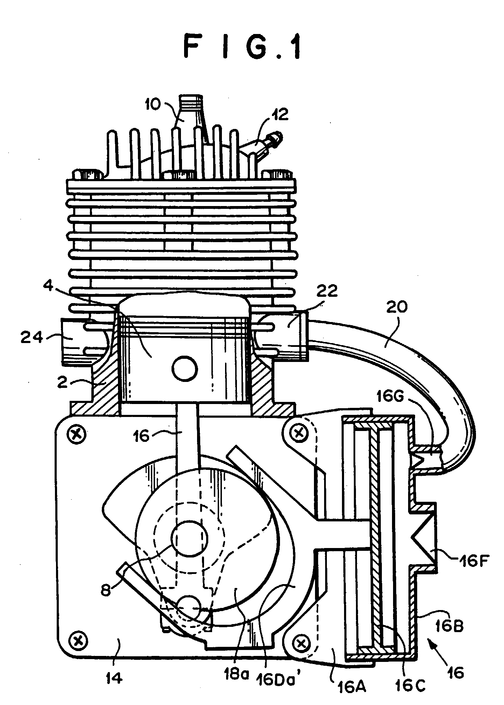

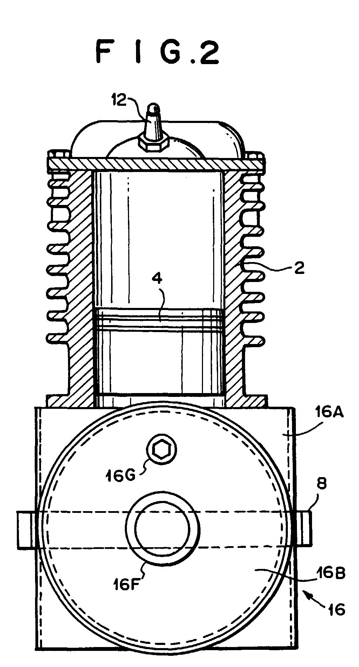

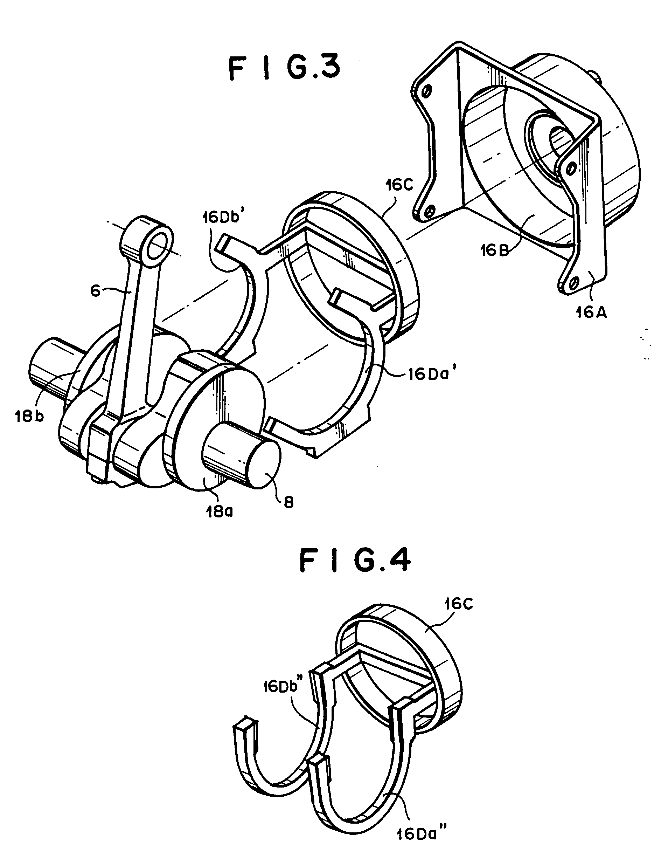

Fig. 1 is a partially cross-sectional side view showing a first embodiment of a two-stroke cycle internal-combustion engine according to the present invention, and Figs. 2 and 3 are partially cross-sectional front view and a partially exploded perspective view of Fig. 1, respectively.
As shown in Figs. 1, 2 and 3, a piston 4 whose cylindrical outer peripheral surface is fitted to the cylindrical inner surface of a cylinder 2 disposed in the up-and-down (vertical) direction is disposed so as to be reciprocatively movable in the up-and-down direction relatively to the cylinder 2. The piston 4 is rotatably connected to the upper end portion of a connecting rod 6 through a piston pin. The other end portion of the connecting rod 6 is rotatably connected to the crank pin of a crank shaft 8. An ignition plug 10 and a fuel injection nozzle 12 are connected to the upper portion of the cylinder 2.

In this embodiment, a scavenging pump 16 is attached to a crank case 14. The scavenging pump 16 is engaged with cams 18a, 18b secured to the crank shaft 8, and it is driven in synchronism with the rotation of the crank shaft 8 (that is, in synchronism with the operation of the engine) by directly using a part of the output of the engine. That is, the scavenging pump 16 includes a casing 16A fixed to the crank case 14, a pump cylinder 16B which is formed integrally with the casing 16A, a pump piston 16C which is disposed in the pump cylinder 16B so as to be reciprocatively movable in a direction perpendicular to the crank shaft 8, and cam followers 16Da', 16Db' fixed to the pump piston 16C.

The cam followers 16Da', 16Db' are designed so as to extend into the crank case 14 and pinch the cams 18a, 18b in the radial direction of the crank shaft 8 from the outer side, respectively. The inner surfaces (hereinafter referred to as "facing inner surfaces") of the cam followers 16Da', 16Db' by which the cams 18a, 18b are pinched respectively are parallel to each other and the facing direction thereof is set to intersect the reciprocative motion direction of the pump piston 16C at 45 degrees. Accordingly, even when the eccentricity amount of the cams 18a, 18b is small, the moving stroke of the pump piston 16C can be greatly increased by $2 \times 2^{1/2}$ times of the eccentricity amount of the cams. By using the above cam followers 16Da', 16Db', the pump piston 16C is bidirectionally (reciprocatively) movable in connection with the rotation of the crank shaft 8.

The pump cylinder 16B is connected to a suction port 16F having an intake valve for sucking the outside air and a discharge port 16G having a discharge valve for discharging the sucked outside air to the cylinder 2. The air discharged from the discharge port 16G is passed through a pipe 20 and guided to an intake port or scavenging port 22 formed on the side surface of the cylinder 2. An exhaust port 24 is also formed on the side surface of the cylinder 2 so as to substantially confront the intake port 22 and be located at a lower position than the intake port 22.

Fig. 4 is a perspective view showing a modification of the cam follower. In this modification, cam followers 16Da", 16Db" secured to the pump piston 16C are disposed so that the facing direction of the facing inner surfaces thereof which pinch the cams 18a, 18b and are disposed in parallel to each other is set to intersect the reciprocative motion direction of the pump piston 16C at 90 degrees, whereby the driving force can be efficiently transmitted from the cams 18a, 18b to the pump piston 16C.

In the foregoing description, the cams 18a, 18b are designed in a simple circular shape and eccentrically secured to the crank shaft 8. However, the shape of the cams of the present invention is not limited to the above shape, and a suitable modification may be made insofar as a desired reciprocative motion of the pump piston 16C can be obtained in accordance with a crank shaft rotational angleθ. For example, the same effect can be obtained by using cams other than the peripheral cam.

Further, according to the present invention, a scavenging operation and supercharging operation which are conformed with a desired specification can be achieved by modifying the shape of the cams 18a, 18b and setting the positional relationship between the intake port 22 and the exhaust port 24 to a desired one, and it is also an important feature of the present invention that various design modifications can be easily performed as described above.

Next, the operation of the engine as described above, particularly the operation of the scavenging pump 16 will be described. The following description on the operation is made to a case where the cam followers 16Da", 16Db" shown in Fig. 4 are used.

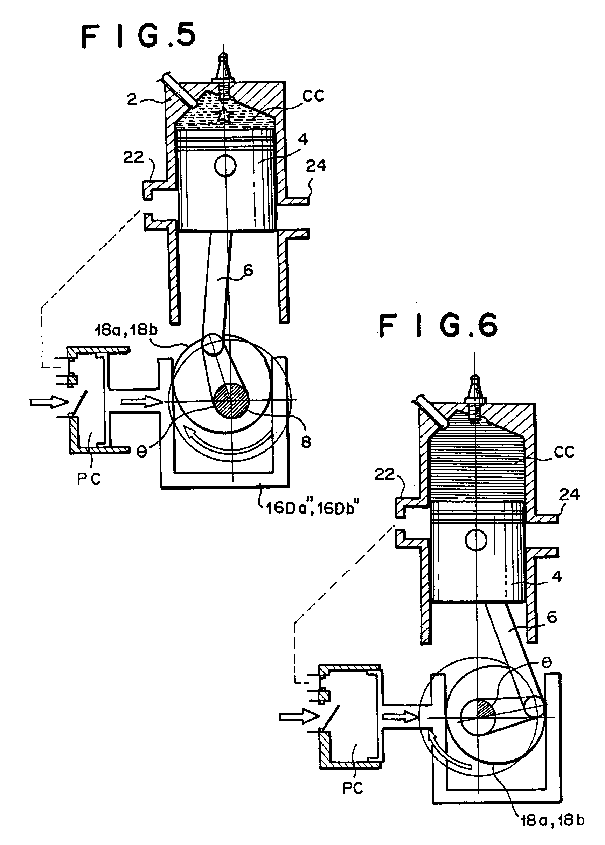

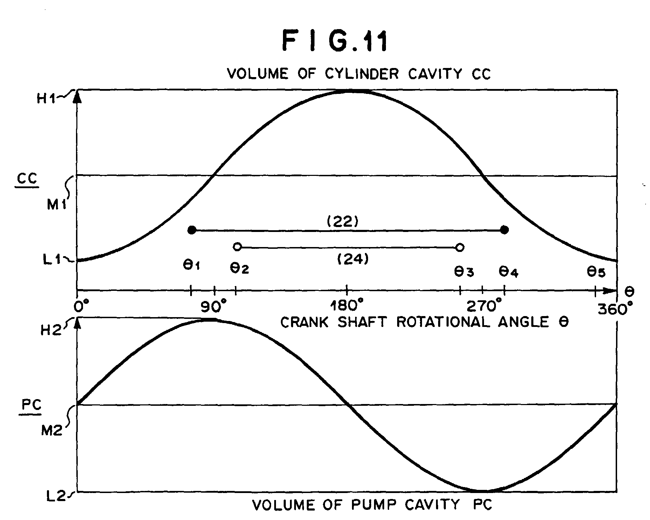

Figs. 5 to 10 are cross-sectional views showing the operation of this embodiment. Fig. 11 is a timing chart showing the operation of the embodiment, and shows the relationship among the rotational angleθ of the crank shaft 8, the volume of the cavity CC of the cylinder 2, the volume of the cavity PC of the pump cylinder 16B, the open/close state of the intake port 22 and the exhaust port 24 of the cylinder 2, and the ignition timing of the ignition plug 10.

As shown in Fig. 11, when the rotational angle θ of the crank shaft 8 varies as follows: 0° → 90° → 180° → 2700° → 360° (=0° ), the volume of the cavity CC of the cylinder 2 varies as follows: minimum value (L1) → intermediate value (M1) → maximum value (H1) → intermediate value → minimum value, and the volume of the cavity PC of the pump cylinder 16B varies as follows: intermediate value (M2)→ maximum value (H2) → intermediate value→ minimum value (L2) → intermediate value.

In the process that the volume of the cylinder cavity CC varies as follows: minimum value→ intermediate value → maximum value, the piston 4 descends in the cylinder 2, and in the process that the volume of the cylinder cavity CC varies as follows: maximum value→ intermediate value → minimum value, the piston 4 ascends in the cylinder 2.

In the process that the volume of the pump cavity PC varies as follows: minimum value→ intermediate value → maximum value, the pump piston 16C is driven in the pump cylinder 16B through the engagement between the cams 18a, 18b and the cam followers 16Da", 16Db", and the intake of gas into the pump cavity PC through the suction port 16F is carried out. Further, in the process that the volume of the pump cavity PC varies as follows: maximum value → intermediate value → minimum value, the pump piston 16C is driven in the pump cylinder 16B through the engagement between the cams 18a, 18b and the cam followers 16Da", 16Db", and the air is discharged from the pump cavity PC through the discharge port 16G into the pipe 20.

The cylinder cavity CC and the intake port 22 intercommunicate with each other in the range of the crank shaft rotational angle $\theta$ from $\theta_1$ (a value slightly smaller than 90°) to $\theta_4$ (a value slightly larger than 270°). The cylinder cavity CC and the exhaust port 24 intercommunicate with each other in the range of the crank shaft rotational angle $\theta$ from $\theta_2$ (a value slightly larger than 90°) to $\theta_3$ (a value slightly smaller than 270°). The ignition of the ignition plug 10 is carried out at the time when the crank shaft rotational angle $\theta$ is equal to $\theta_5$ (a value slightly smaller than 360°).

The above operation is performed on the basis of the explosion energy caused by igniting the fuel/air mixture gas compressed in the cylinder 2 with the ignition plug 10.

Fig. 5 shows the two-cycle internal combustion engine under a state satisfying $\theta = \theta_5$. The ignition of the fuel/air mixture gas in the cylinder cavity CC is carried out by using the ignition plug 10, whereby the efficiency is enhanced so that the maximum pressure is produced on the piston 4 at a subsequent angle to $\theta = 360° = 0°$.

Figs. 6 to 10 show the two-cycle internal combustion engine under a state satisfying $\theta = \theta_1$, under a state satisfying $\theta = \theta_2$, under a state that $\theta$ is equal to about 135°, under a state that $\theta$ is equal to about 180° and under a state satisfying $\theta = \theta_3$, respectively.

From the state of Fig. 5 until the state of Fig. 6, the explosion stroke is carried out while the cylinder cavity CC intercommunicates with neither the intake port 22 nor the exhaust port 24, and the sucking of the air into the pump cavity PC is carried out during this time period.

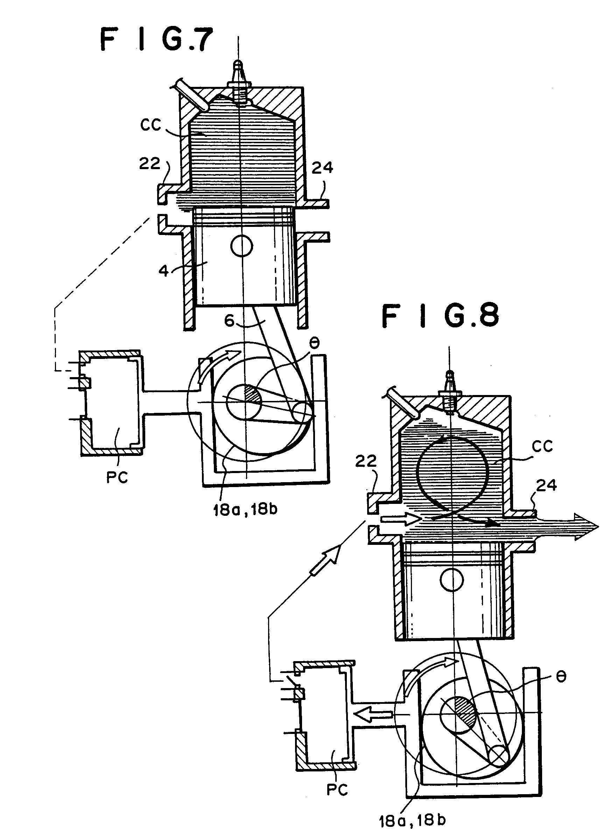

From the state of Fig. 6 until the state of Fig. 7, the cylinder cavity CC intercommunicates with the intake port 22, however, it does not intercommunicate with the exhaust port 24.

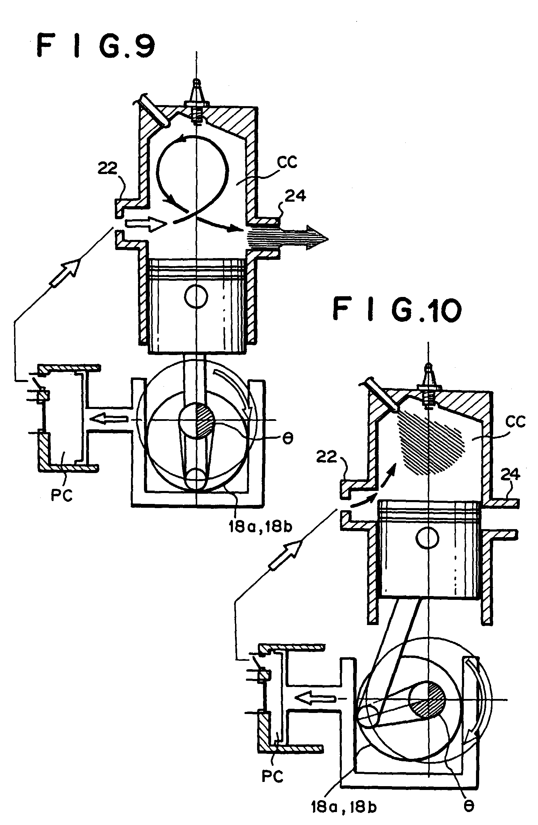

From the state of Fig. 7 until the state of Fig. 9, the cylinder cavity CC intercommunicates with both the intake port 22 and the exhaust port 24, and during this time period the air is supplied from the pump cavity PC through the intake port 22 into the cylinder cavity CC, and the combusted gas is discharged through the exhaust port 24, thereby performing the scavenging operation.

From the state of Fig. 9 until the state of Fig. 10, the cylinder cavity CC still intercommunicates with both the intake port 22 and the exhaust port 24, and during this time period the air is supplied from the pump cavity PC through the intake port 22 into the cylinder cavity CC, thereby performing the air intake into the cylinder cavity CC.

From the state of Fig. 10 until the time when the intake port 22 is closed, the cylinder cavity CC does not intercommunicate with the exhaust port 24, and during this time period the air is supplied from the pump cavity PC through the intake port 22 into the cylinder cavity CC and is compressed, thereby supercharging the air into the cylinder cavity CC. At the same time, fuel is injected from the fuel injection nozzle 12 into the cylinder cavity CC, thereby forming fuel/air mixture gas.

After that, the cylinder cavity CC intercommunicates with neither the intake port 22 nor the exhaust port 24 until it returns to the state shown in Fig. 5, and the fuel/air mixture gas in the cylinder cavity CC is compressed and the sucking of air into the pump cavity PC is carried out.

The discharge amount of the scavenging pump 16 can be increased to about 1.3 times of the displacement of the cylinder 2 when the pump cylinder 16B has a double bore and a one-third stroke with respect to the engine cylinder 2. Accordingly, the discharge amount of the scavenging pump 16 can be further increased and the scavenging, the air intake and the supercharging can be sufficiently performed. In the present invention, it is particularly preferable that the stroke is reduced by increasing the bore of the pump cylinder 16B when a desired discharge amount of the scavenging pump is achieved, whereby the projection of the scavenging pump 16 in the engine can be minimized. Further, since the fuel is injected into the cylinder cavity CC under the state that the exhaust port 24 is closed, non-combusted fuel is prevented from being discharged from the exhaust port 24.

As described above, according to this embodiment, the scavenging pump is driven interlockingly with the operation of the engine, and the scavenging, the air intake and the supercharging can be implemented by suitably setting the positional relationship between the intake port and the exhaust port of the engine in the axial direction of the cylinder. Accordingly, non-combusted raw gas is prevented from being exhausted, and the combustion efficiency can be enhanced, so that there can be provided a compact two-cycle internal combustion engine which can reduce pollution of the atmospheric air and achieve low specific fuel consumption.

In this embodiment, the mist of lubricating oil in the crank case 14 is hardly sucked into the cylinder 2, so that the burning of the lubricating oil in the cylinder 2 can be minimized, and the concentration of hydrocarbons and other components in the exhausted gas can be reduced.

In the case of the conventional scavenging system in which the gas in the crank case is supplied into the cylinder, the engine is designed not to establish such a state that the exhaust port of the cylinder is closed by the piston and the intake port is not perfectly closed by the piston. On the other hand, according to the present invention, the phase difference between volume variation of the cylinder cavity CC and volume variation of the pump cavity PC can be set to a desired value as shown in Fig. 11. Therefore, the positional relationship between the intake port 22 and the exhaust port 24 can be set so that the exhaust port 24 of the cylinder 2 is closed by the piston 4 and the intake port 22 is not perfectly closed by the piston 4, and the operation of the above embodiment can be performed.

In this embodiment, one scavenging pump 16 is attached to the crank case 14. In place of this arrangement, two scavenging pumps may be attached to both the sides of the crank case 14 respectively and operated at the same time to perform the scavenging operation in the cylinder 2. In this case, an additional scavenging pump which is the same type as the scavenging pump 16 shown in Fig. 1 is attached to the crank case 14 so as to confront the scavenging pump 16 through the crank case 14, and other cams which are the same type as the cams 18a, 18b are secured to the crank shaft 8 with keeping a desired phase so that the additional scavenging pump carries out the suction/discharge operation in synchronism with the scavenging pump 16. The air discharged from the discharge port of the additional scavenging pump joins the air discharged from the discharge port of the scavenging pump 16 in the pipe 20, and then is guided to the intake port 22 formed on the side surface of the cylinder 2.

Further, in the above embodiment, the ignition of the fuel/air mixture gas in the cylinder cavity CC is carried out by using the ignition plug 10. However, the present invention is also applicable to a Diesel engine using no ignition plug 10.

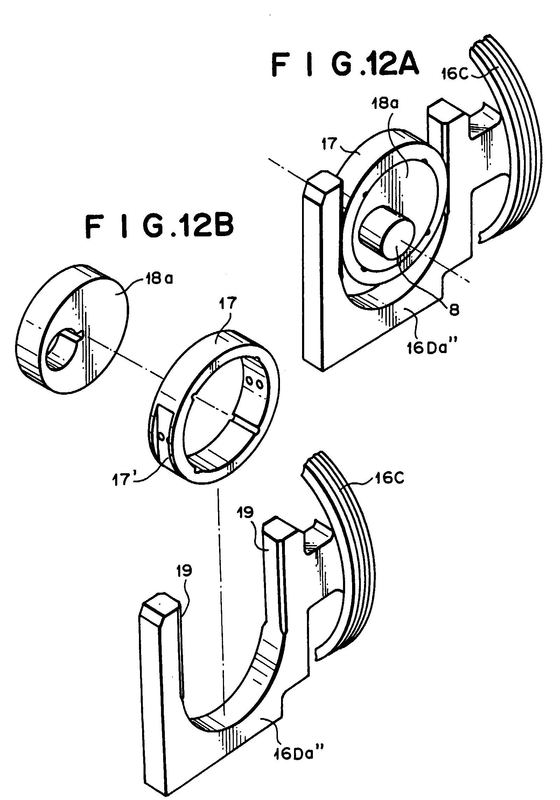

Fig. 12A is a partial perspective view showing a modification of the engagement between the cam shown in Fig. 1 and the cam follower shown in Fig. 4, and Fig. 12B is an exploded perspective view of Fig. 12A.

In this modification, a tire (annular member) 17 is fitted to the circular outer peripheral surface of the eccentric cam 18a so that an inner peripheral portion of the tire 17 is slidable relative to a circular outer peripheral portion of the eccentric cam 18a in the peripheral direction (i.e., relatively rotatable). The tire 17 is formed of metal, for example. A pair of slide faces (slide outer faces) 17' extending in parallel to each other are formed on the outer peripheral portion of the tire 17, and they are slidably fitted to a pair of slide faces (slide inner faces) 19 of the cam follower 16Da" which extend in parallel to each other. When the crank shaft 8 and the cam 18a secured to the crank shaft 8 are rotated, the cam 18a is rotated in surface contact with the tire 17, and the tire 17 is reciprocatively moved while the slide outer faces 17' are slid along the slide inner faces 19 of the cam follower 16Da".

In Fig. 12, the engagement between one of the cams (18a) and one of the cam followers (16Da") is illustrated. The other engagement between the other cam 18b and the other cam follower 16Db" is the same. According to the engagement relationship between the cams and the cam followers, each of the contact between the cam 18a and the tire 17 and the contact between the tire 17 and the cam follower 16Da" is surface contact, and thus the surface pressure under the operation can be reduced. Therefore, the abrasion of these members can be lowered, and the lifetime thereof can be increased.

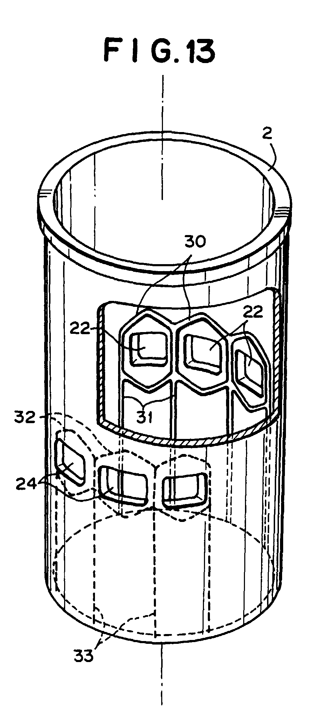

Fig. 13 is a partially notched perspective view showing an embodiment of the cylinder of the two-cycle internal combustion engine. The cylinder of this embodiment may be used as the cylinder 2 of the internal combustion engine described with reference to Figs. 1 to 11, and it has intake ports 22 and exhaust ports 24.

A lubricating oil groove 30 having hexagonal patterns each of which is closed so as to surround the opening of each intake port 22 is formed on the inner surface of the cylinder 2. The lubricating oil groove 30 is further provided with an extension groove portion 31 extending in the up-and-down direction corresponding to the reciprocative motion direction (i.e., the central axial direction of the cylinder) of the piston in the cylinder 2. Likewise, a lubricating oil groove 31 having hexagonal patterns each of which is closed so as to surround the opening of each exhaust port 24 is formed on the inner surface of the cylinder 2, and the lubricating oil groove 32 is further provided with an extension groove portion 33 extending in the up-and-down direction.

The reason why these lubricating oil grooves 30, 32 are provided is as follows. That is, in the two-cycle internal combustion engine, the explosion stroke is carried out in the cylinder 2 every one reciprocation of the piston (i.e., one cycle, two strokes), and thus it is required to supply lubricating oil into the gap between the cylinder 2 and the piston more excellently as compared with the four-stroke cycle internal-combustion engine. However, in the two-cycle internal combustion engine having the intake ports 22 and the exhaust ports 24 on the inner surface of the cylinder 2 as described in the above embodiment, the lubricating oil is liable to leak out from the openings of the intake ports 22 and the exhaust ports 24 when the piston is moved in the cylinder 2. If the leakage of the lubricating oil is severe, the amount of the lubricating oil to be fed into the cylinder is increased, and the actual supply amount of the lubricating oil may not follow a required amount. In addition, the lubricating oil leaking from the exhaust ports 24 may cause pollution of the atmospheric air and thus it is desirable to reduce the leakage amount of the lubricating oil at maximum.

Therefore, in this embodiment, the lubricating oil grooves 30 and 32 are formed on the inner surface of the cylinder 2 so as to surround the openings of the intake ports 22 and the exhaust ports 24, thereby withdrawing into the lubricating oil grooves 30, 32 the lubricating oil which is scraped by a piston ring and pushed from the upper or lower side of the intake ports 22 and the exhaust ports 24 to the intake ports 22 or the exhaust ports 24 during the motion of the piston, so that the leakage amount of the lubricating oil from the intake ports 22 and the exhaust ports 24 can be greatly reduced.

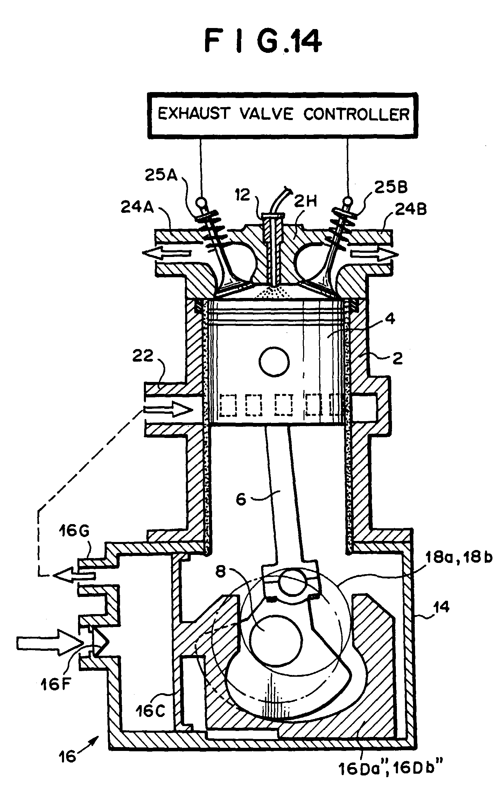

Fig. 14 is a cross-sectional view showing a second embodiment of the two-cycle internal combustion engine according to the present invention. In Fig. 14, the elements having the same functions as shown in Figs. 1 to 13 are represented by the same reference numerals.

The above first embodiment relates to a cross scavenging type in which the intake port(s) and the exhaust port(s) are provided in the side surface of the cylinder. However, the second embodiment relates to an overhead exhaust valve type in which an exhaust port is formed on the cylinder head and the exhaust port is provided with an exhaust valve.

In this embodiment, two exhaust ports 24A, 24B are provided to the cylinder head 2H, and these exhaust ports 24A and 24B are provided with exhaust valves 25A, 25B, respectively. In the exhaust (scavenging) step, both of the exhaust valves 25A, 25B are simultaneously opened to exhaust gas. The open/close operation of the exhaust valves 25A, 25B is controlled by an exhaust valve controller. The exhaust valve controller may comprise a rotating shaft to which the rotational force is transmitted from the crank shaft 8 through appropriate rotational force transmitting means such as a gear train, a belt or the like, and an exhaust valve driving cam member secured to the rotating shaft. The valve open/close operation can be implemented by connecting a cam follower abutting against the driving cam member to the exhaust valves 25A, 25B. However, the exhaust valve controller is not necessarily designed to obtain the rotational force from the crank shaft 8, and it may be driven by a motor insofar as it operates in synchronism with the rotation of the crank shaft 8.

In this embodiment, the engine is provided with two exhaust ports with the exhaust valves, however, three or four exhaust ports may be provided. By controlling the exhaust valves of the plural exhaust ports to be opened at the same time, sufficient exhaust (scavenging) can be performed even when the engine is rotated at a high speed.

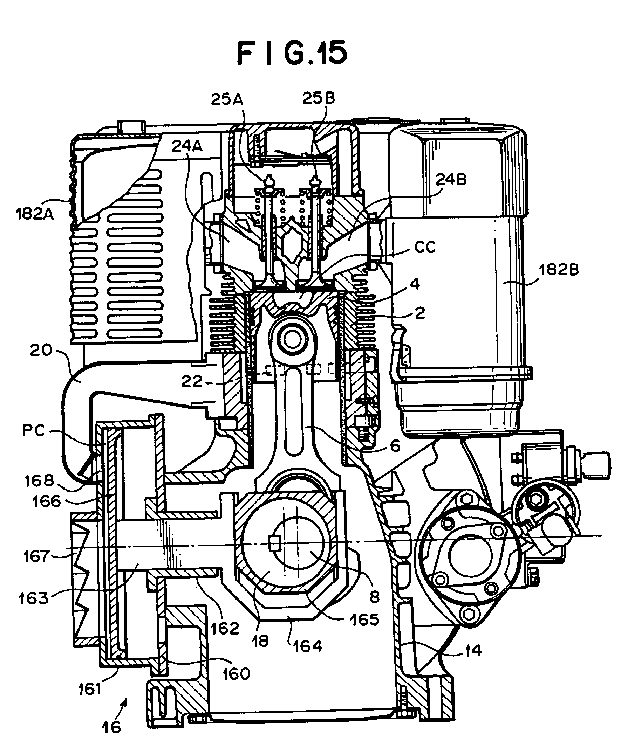

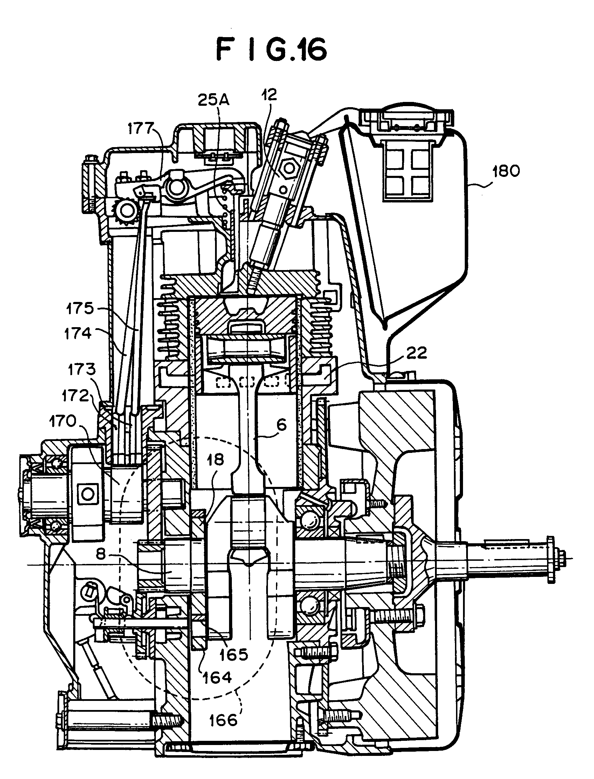

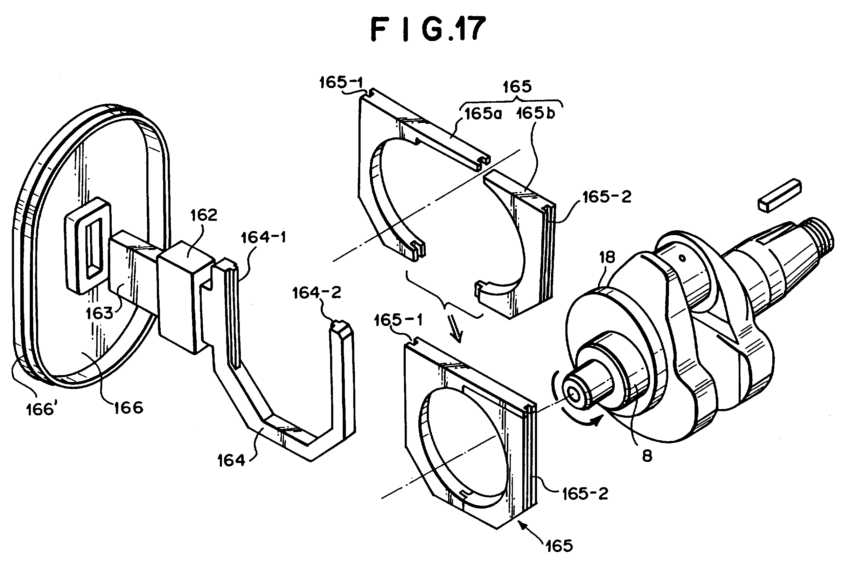

Figs. 15 and 16 are sectional views showing a third embodiment of the two-cycle internal combustion engine according to the present invention, and Fig. 17 is an exploded perspective view showing a scavenging pump portion thereof. In these figures, members having the same functions as shown in Figs. 1 to 14 are represented by the same reference numerals.

In these figures, the scavenging pump 16 is affixed to the crank case 14. The scavenging pump 16 is engaged with the circular eccentric cam 18 secured to the crank shaft 8, and it is driven in the same manner as the above embodiment. The scavenging pump 16 has a member 160 secured to the crank case 14, a pump cylinder 161 secured to the member 160, a slide guide member 162 secured to the member 160, a pump piston rod 163 disposed so as to be guided by the slide guide member 162 and reciprocatively movable in a direction perpendicular to the crank shaft 8, a cam follower 164 connected to one end portion of the piston rod 163 (an end portion nearer to the crank shaft 8), and an annular member 165 engaged with the cam follower 164. The annular member 165 comprises two members 165a and 165b as shown in Fig. 17. These two members 165a and 165b are fitted to each other in contact with each other to thereby form a desired shape. A pair of projecting slide guides (slide inner faces) 164-1, 164-2 which are disposed in parallel so as to extend in the up-and-down direction and confront each other are formed on the cam follower 164. In association with these projecting slide guides 164-1, 164-2, a pair of recess slide guides (slide outer faces) 165-1, 165-2 which extend in parallel in the up-and-down direction are formed on the annular member 165. The projecting slide guides 164-1, 164-2 are fitted to the corresponding recess slide guides 165-1, 165-2. The outer peripheral surface of the eccentric cam 18 is fitted to the inner peripheral surface of the circular opening formed at the center of the annular member 165. As shown in Fig. 16, the annular member 165 (two members 165a, 165b) is positionally restricted from both the sides thereof with respect to the direction of the crank shaft 8 by the side surface of the crank shaft 8 and the inner surface of the crank case 14, whereby the two members 165a, 165b of the annular member 165 are presented from being separated from each other.

As in the case of the above embodiment, a pump piston 166 is connected to the tip of the piston rod 163 (an end portion farther from the cam follower 164), and the piston 166 is disposed so as to be reciprocatively movable in the horizontal direction (the same direction as the moving direction of the piston rod 163) in the cylinder 161. As shown in Fig. 17, a piston ring 166' is provided to the outer peripheral surface of the piston 166 which is fitted to the inner peripheral surface of the cylinder 161.

Accordingly, when the crank shaft 8 is rotated in a direction indicated by an arrow in Fig. 17, on the basis of the engagement relationship between the eccentric cam 18 and the annular member 165, the engagement relationship between the annular member 165 and the cam follower 164 and the engagement relationship between the piston rod 163 and the slide guide member 162, the annular member 165 is reciprocatively moved in the up-and-down direction relatively to the cam follower 164 with a certain stroke, and the cam follower 164 and the piston rod 163 are reciprocatively moved in the horizontal direction relatively to the slide guide member 162 and the crank case 14. Through this motion, the piston 166 is reciprocatively moved in the horizontal direction in the cylinder 161, and the volume of the pump cavity PC varies periodically, thereby performing a pumping operation.

The pump cylinder 161 is connected to a suction port 167 with an intake valve for sucking the outside air, and a discharge port 168 with an exhaust valve for discharging the sucked outside air to the cylinder 2. The air discharged from the discharge port 168 is passed through the pipe 20 and then guided to the intake port 22 formed on the side surface of the cylinder 2 as in the case of the above embodiment.

In this embodiment, two exhaust ports 24A, 24B formed at the cylinder head as in the case of the embodiment shown in Fig. 14, and exhaust valves 25A, 25B are fixed to the exhaust ports 24A, 24B and urged by springs so as to close the exhaust ports 24A, 24B. Therefore, this embodiment relates to an overhead exhaust valve system. That is, in the exhaust (scavenging) stroke, only one of the exhaust valves 25A, 25B is opened to exhaust gas, and the other exhaust valve is kept closed. The open/close control of the exhaust valves 25A, 25B is performed in synchronism with the rotation of the crank shaft 8. That is, as shown in Fig. 16, push rods 174, 175 are driven by cams 172, 173 secured to a rotational shaft 170 which is disposed in parallel to the crank shaft 8 and receives the rotational force from the crank shaft 8, and one end of a rocker arm 177 is pushed at a suitable timing to move the exhaust valve 25A (25B) by the other end of the rocker arm 177 against the urging force caused by the spring to the closing position, thereby performing the open/close operation of the exhaust valves. The open/close operation of the exhaust valves 25A, 25B may be simultaneously performed as in the embodiment of Fig. 14.

In Fig. 16, fuel is supplied from a fuel tank 180 to the fuel injection nozzle 12 through a fuel feeding system (not shown). The exhaust gas discharged from the exhaust ports 24A, 24B is discharged through exhaust gas purifiers 182A, 182B to the outside air.

In this embodiment, the annular member 165 is constructed by making the two members 165a, 165b abut against each other, so that the operability in the assemble/disassemble operation is enhanced.

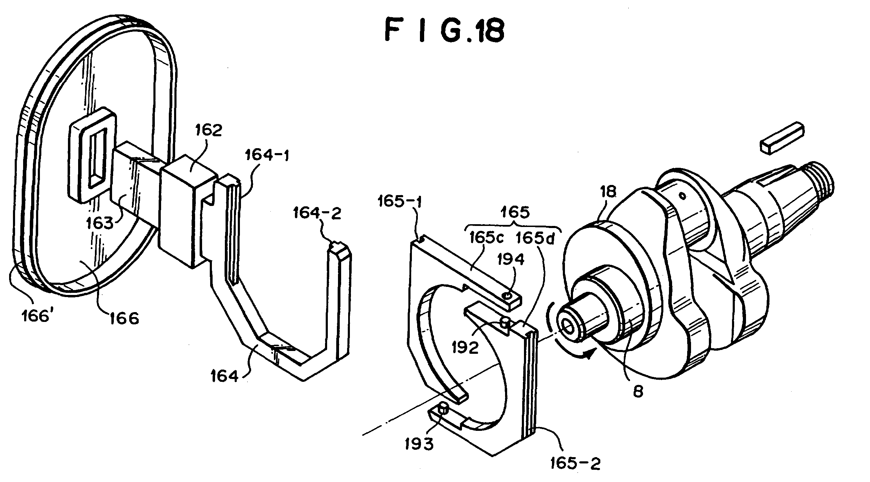

Fig. 18 is a partial exploded perspective view showing a modification of the scavenging pump portion of the third embodiment. In Fig. 18, the members having the same functions as shown in Fig. 17 are represented by the same reference numerals.

In this modification, only the construction of the annular member 165 is different from the embodiment shown in Fig. 17. The annular member 165 comprises two members 165c and 165d. Two face-up small projections 192, 193 are formed at different positions of one member 165d which are different with respect to the horizontal direction, two small holes 194 (only one is illustrated) are formed at the corresponding positions of the other member 165c. The two face-up small projections 192, 193 are merely fitted to the small holes 194 from the lower side to thereby construct the annular member 165. This modification can also have the same function as the embodiment shown in Fig. 17.

**Claims**

1. A two-cycle internal combustion engine, comprising:

   a cylinder having an intake port;
   a piston disposed in said cylinder so as to be reciprocatively movable;
   a crank shaft connected to said piston, wherein reciprocative motion of the piston is converted to rotational motion of said crank shaft;
   a scavenging pump installed in a crank case in which said crank shaft is accommodated, said scavenging pump comprising a pump cylinder, a pump piston disposed in said pump cylinder so as to be reciprocatively movable, and a pump driving force transmitting member for transmitting the driving force between said crank shaft and said pump piston so as to generate at least a part of the reciprocative motion of said pump piston on the basis of the rotation of said crank shaft, said pump cylinder having a discharge port, wherein said discharge port is connected to said intake port of the cylinder.

2. The two-cycle internal combustion engine as claimed in claim 1, wherein said pump driving force transmitting member comprises a cam secured to said crank shaft, and a cam follower which is engaged with said cam and secured to said pump piston.

3. The two-cycle internal combustion engine as claimed in claim 2, wherein said cam transmits the driving force to said cam follower in both directions of the reciprocative motion of said pump piston.

4. The two-cycle internal combustion engine as claimed in claim 3, wherein said cam is an eccentric cam having a circular outer peripheral portion, an annular member having an inner peripheral portion which is slidable in the peripheral direction relatively to the outer peripheral portion of said cam is provided, and two mutually parallel slide outer faces formed on the peripheral portion of said annular member and two mutually parallel side inner faces formed on said cam follower are fitted to each other so as to be relatively slidable in a direction perpendicular to said crank shaft.

5. The two-cycle internal combustion engine as claimed in claim 4, wherein said annular member is composed of plural members which are disposed so that adjacent ones of said plural members abut against each other.

6. The two-cycle internal combustion engine as claimed in claim 1, wherein said scavenging pump sucks the outside air into said pump cylinder through a suction port.

7. The two-cycle internal combustion engine as claimed in claim 1, wherein the positional relationship between an exhaust port of said cylinder and said intake port of the cylinder is set so that there exists such a state that said exhaust port is closed by said piston and said intake port is not perfectly closed by said piston.

8. The two-cycle internal combustion engine as claimed in claim 1, further comprising a fuel injection nozzle for injecting fuel into the cylinder.

9. The two-cycle internal combustion engine as claimed in claim 1, wherein said cylinder is provided with said intake port and/or an exhaust port on the side surface thereof, and also provided, on the inner surface thereof, with a lubricating oil groove which surrounds said intake port and/or said exhaust port.

10. The two-cycle internal combustion engine as claimed in claim 1, wherein a plurality of exhaust ports are formed in the head of said cylinder, each of said exhaust ports is provided with an exhaust valve, and said exhaust valves are controlled to open/close said exhaust ports.

11. The two-cycle internal combustion engine as claimed in claim 10, wherein the control of said exhaust valves is performed in synchronism with the rotation of said crank shaft on the basis of the rotation of said crank shaft.

12. The scavenging pump for use in the two-cycle internal combustion engine as claimed in anyone of claims 1 to 11.

13. A cylinder for use in a two-cycle internal combustion engine in which a piston is disposed in a cylinder so as to be reciprocatively movable and reciprocative motion of the piston is converted to rotational motion of a crank shaft, said cylinder comprising:

   an intake port and/or an exhaust port formed on the side surface of said cylinder; and
   a lubricating oil groove surrounding each of said intake port and/or said exhaust port and formed on the inner surface of said cylinder.

# F I G . 1

# F I G .2

# F I G.3

# F I G.4

# FIG.5

# FIG.6

# F I G.7

# F I G.8

# F I G.9

# F I G.10

# F I G.11

## VOLUME OF CYLINDER CAVITY CC

CRANK SHAFT ROTATIONAL ANGLE $\theta$

VOLUME OF PUMP CAVITY PC

F I G .12A

16C

18a

17

16Da"

8

F I G .12B

18a

17

17'

16C

19

19

16Da"

# F I G. 13

# F I G.14

EXHAUST VALVE CONTROLLER

# F I G.15

# F I G.16

# F I G.17

EP 1 039 113 A2

F I G.18